# EUROPEAN PATENT APPLICATION

(11) **EP 4 506 164 A1**
(43) Date of publication of application: **12.02.2025**
(21) Application number: 23780487.7
(22) Date of filing: 28.03.2023
(51) Int. Cl.: B32B 27/18

(54) **TRANSFER SHEET AND WEATHER-RESISTANT ARTICLE**

(30) Priority: 28.03.2022 JP 2022052587
(71) Applicant: Dai Nippon Printing Co., Ltd., Tokyo 162-8001 (JP)
(72) Inventor: FURUTA Satoshi, Tokyo 162-8001 (JP); SUGITA Natsuo, Tokyo 162-8001 (JP); MIYAZAKI Saori, Tokyo 162-8001 (JP); AKITA Yasuhiro, Tokyo 162-8001 (JP)
(74) Representative: Müller-Boré & Partner Patentanwälte PartG mbB
(86) International application number: PCT/JP2023/012439
(87) International publication number: WO 2023/190478

(57) **Abstract**

A transfer sheet includes a releasable substrate and a transfer layer. The transfer layer has a surface protective layer and a primer layer. The surface protective layer is located between the releasable substrate and the primer layer. The surface protective layer contains a cured resin, a first UV absorber having an absorption peak at a first wavelength, a second UV absorber having an absorption peak at a second wavelength longer than the first wavelength, and a third UV absorber having an absorption peak at a third wavelength longer than the second wavelength.

## Description

### Technical Field

The present disclosure relates to a transfer sheet and a weather-resistant article.

### Background Art

In the related art, a surface protective layer has been provided on the surface of articles, such as interior materials for buildings, exterior materials for buildings, furniture, fixture members, and home appliances, to impart scratch resistance and dirt resistance to the articles. The surface protective layer is formed, for example, by coating or by using a transfer sheet (see, for example, PTL 1).

### Citation List

### Patent Literature

PTL 1: Japanese Unexamined Patent Application Publication No. 2004-345228

### Summary of Invention

### Technical Problem

For example, exterior materials used outdoors preferably have high weather resistance because they may be placed in an environment exposed to direct sunlight. However, a surface protective layer formed on the surface of a transfer receptor (transfer receiver, body to be transferred) by using the transfer sheet described above tends to peel off, resulting in insufficient weather resistance. The transfer sheet typically includes a transfer layer including a surface protective layer and a primer layer. The inventors of the present disclosure have found that insufficient weather resistance results from insufficient adhesion between the surface protective layer and the primer layer after the transfer sheet is placed in an environment exposed to direct sunlight for a long period of time.

An object of the present disclosure is to suppress, for a long period of time, degradation of adhesion between a surface protective layer and a primer layer in a transfer layer that includes the surface protective layer and the primer layer and that has been transferred to a transfer receptor from a transfer sheet including the transfer layer.

### Solution to Problem

A transfer sheet of the present disclosure includes a releasable substrate and a transfer layer, wherein the transfer layer has a surface protective layer and a primer layer, the surface protective layer is located between the releasable substrate and the primer layer, and the surface protective layer contains a cured resin, a first UV absorber having an absorption peak at a first wavelength, a second UV absorber having an absorption peak at a second wavelength longer than the first wavelength, and a third UV absorber having an absorption peak at a third wavelength longer than the second wavelength.

### Advantageous Effects of Invention

According to the present disclosure, it is possible to suppress, for a long period of time, degradation of adhesion between a surface protective layer and a primer layer in a transfer layer that includes the surface protective layer and the primer layer and that has been transferred to a transfer receptor from a transfer sheet including the transfer layer in an environment exposed to direct sunlight.

### Brief Description of Drawings

[Fig. 1] Fig. 1 is a schematic cross-sectional view of an embodiment of a transfer sheet of the present disclosure.
[Fig. 2] Fig. 2 is a schematic cross-sectional view of an embodiment of the transfer sheet of the present disclosure.
[Fig. 3] Fig. 3 is a schematic cross-sectional view of an embodiment of a weather-resistant article of the present disclosure.

### Description of Embodiments

Embodiments of the present disclosure will be described below in detail. The present disclosure can be implemented in many different forms and is not construed as being limited to the description of the following exemplary embodiments. For clear description, the width, thickness, shape, or other features of each layer may be illustrated more schematically in the drawings than in the embodiments. However, the drawings are merely examples and do not limit the interpretation of the present disclosure. In this description and each of the drawings, the same elements as those already described in the illustrated drawings may be assigned with the same reference characters, and detailed description may be omitted as appropriate.

Films and sheets may be referred to as film and sheet in descending order of relative thickness. In the present disclosure, however, sheets encompass films unless otherwise specified.

When there are multiple possible upper limits and multiple possible lower limits for a certain parameter in the present disclosure, the numerical range of the parameter may be composed of a combination of any one of the possible upper limits and any one of the possible lower limits. Examples of the parameter include physical properties, component content, and layer thickness. For example, the expression "Parameter B is preferably A1 or more, more preferably A2 or more, still more preferably A3 or more. Parameter B is preferably A4 or less, more preferably A5 or less, still more preferably A6 or less." will be described. In this example, the numerical range of the parameter B may be A1 or more and A4 or less, A1 or more and A5 or less, A1 or more and A6 or less, A2 or more and A4 or less, A2 or more and A5 or less, A2 or more and A6 or less, A3 or more and A4 or less, A3 or more and A5 or less, or A3 or more and A6 or less.

In the following description, each of the components described below (e.g., resin component, UV absorber, light stabilizer, colorant, and additives) may be used singly or in combination of two or more, unless otherwise specified.

A transfer sheet of the present disclosure includes a releasable substrate and a transfer layer.

The transfer layer is releasably attached to the releasable substrate.

The transfer layer includes a surface protective layer and a primer layer. The surface protective layer is located between the releasable substrate and the primer layer. The surface protective layer forms, for example, a surface layer of the transfer layer on the releasable substrate side. The transfer layer may further include an adhesive layer. The adhesive layer forms, for example, a surface layer of the transfer layer on the side opposite from the releasable substrate. The transfer layer may thus include the surface protective layer, the primer layer, and the adhesive layer in this order.

In the transfer sheet of the present disclosure, the transfer layer may further include other layers different from the surface protective layer, the primer layer, and the adhesive layer. As other layers, for example, a design layer and other known layers can be selected and used as appropriate.

The surface protective layer contains a cured resin, a first UV absorber having an absorption peak at a first wavelength, a second UV absorber having an absorption peak at a second wavelength longer than the first wavelength, and a third UV absorber having an absorption peak at a third wavelength longer than the second wavelength. The UV absorbers will be described below in detail. In a weather-resistant article obtained by transferring the transfer layer from the transfer sheet of the present disclosure to the transfer receptor, the adhesion between the surface protective layer and the primer layer is unlikely to degrade in an environment exposed to direct sunlight, so that the weather-resistant article can maintain weather resistance for a long period of time in the environment.

To maintain the weather resistance of the weather-resistant article including the primer layer and the surface protective layer over a long period of time, it is necessary to suppress deterioration of the primer layer. Therefore, how much UV light, which is considered as one of the factors causing deterioration of the primer layer, the surface protective layer can absorb is important. The inventors of the present disclosure have found that there are some cases in which a surface protective layer containing one or two UV absorbers can suppress UV deterioration of the primer layer for a short term but fails to sufficiently suppress UV deterioration of the primer layer for a long term. This may be based on the following reasons.

One of the factors contributing to adhesion between the primer layer and the surface protective layer is a polymer component contained in the primer layer. When the polymer component deteriorates due to UV rays, the primer layer itself may become brittle so that the adhesion between the primer layer and the surface protective layer may loosen, and peeling may occur at the interface between the primer layer and the surface protective layer. This degrades the weather resistance of the article described above. For example, exposure of the article to UV irradiation for a long period of time causes gradual deterioration of the polymer component contained in the primer layer.

For example, a surface protective layer containing a large amount of one or two UV absorbers may sufficiently absorb UV rays. In this case, however, there may be some problems associated with bleed-out of the UV absorbers, adhesion between the surface protective layer and the primer layer, and a decrease in the transparency of the surface protective layer.

To solve such problems, the inventors of the present disclosure have found that a surface protective layer containing at least three UV absorbers having different wavelengths at their absorption peaks can improve the long-term weather resistance of the article. This may be based on the following reason. A combinational use of three or more UV absorbers described above can cover a wide range of UV wavelengths. This allows the UV absorbers to sufficiently absorb UV rays across a wide range of wavelengths. Therefore, UV deterioration of the primer layer can be suppressed over a long period of time. As a result, the article can sufficiently maintain its weather resistance for a long period of time in an environment exposed to direct sunlight. Since the surface protective layer can also suppress the deterioration of the transfer receptor itself, the transfer sheet of the present disclosure can be applied to various types of transfer receptors.

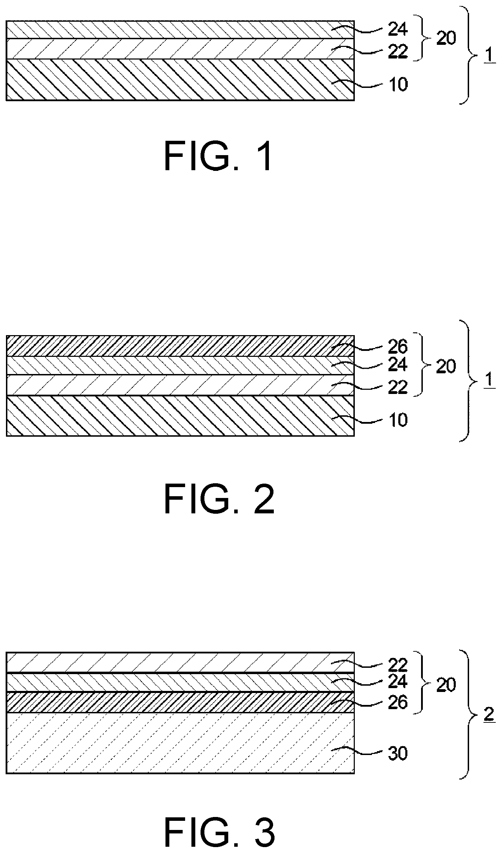

Fig. 1 and Fig. 2 each illustrate the structure of an embodiment of the transfer sheet of the present disclosure.

Referring to Fig. 1, a transfer sheet 1 includes a releasable substrate 10 and a transfer layer 20 releasably attached to the releasable substrate 10. The transfer layer 20 includes a surface protective layer 22 and a primer layer 24 in this order in the thickness direction from the releasable substrate 10 side. In other words, the releasable substrate 10, the surface protective layer 22, and the primer layer 24 are stacked in the thickness direction, which is the vertical direction in the drawing of Fig. 1.

Referring to Fig. 2, the transfer layer 20 in the transfer sheet 1 further includes an adhesive layer 26. The transfer layer 20 includes the surface protective layer 22, the primer layer 24, and the adhesive layer 26 in this order in the thickness direction from the releasable substrate 10 side. In other words, the releasable substrate 10, the surface protective layer 22, the primer layer 24, and the adhesive layer 26 are stacked in the thickness direction, which is the vertical direction in the drawing of Fig. 2.

The structure of the transfer sheet of the present disclosure will be described below in detail.

The transfer sheet of the present disclosure includes the releasable substrate.

The releasable substrate may be, for example, a film made of a resin component (hereinafter also referred to as "resin film"). Examples of the resin component include polyester, polyolefin, polystyrene, vinyl resin, (meth)acrylic resins, polyamide, polyimide, and polycarbonate. In the present disclosure, the term "(meth)acrylic" encompasses both "acrylic" and "methacrylic," and the term "(meth)acrylate" encompasses both "acrylate" and "methacrylate.

The releasable substrate is preferably a polyester film or a polyolefin film. When the releasable substrate is such a film, for example, the surface protective layer and other layers can be easily formed on the film.

Examples of the polyester include polyethylene terephthalate (PET), polybutylene terephthalate (PBT), polyethylene naphthalate (PEN), and polyethylene terephthalate-isophthalate copolymer. Of these, PET and PBT are preferred, and PET is more preferred, because thermal shrinkage during the transfer sheet production and shrinkage caused by exposure to ionizing radiation are unlikely to occur.

Examples of the polyolefin include polyethylene, polypropylene, polybutene, ethylene-propylene copolymer, and ethylene-propylene-butene copolymer. Of these, polypropylene is preferred because the thermal shrinkage during the transfer sheet production and the shrinkage caused by exposure to ionizing radiation are unlikely to occur.

The resin film may be a stretched film or an unstretched film, preferably a stretched film. The stretch ratio of the stretched film in the machine direction (MD) and/or the transverse direction (TD) is, for example, 5 times or more and 30 times or less. When the resin film is a stretched film, for example, the resin film is less subject to thermal shrinkage caused by heat treatment during the transfer sheet production and shrinkage caused by cross-linking treatment using exposure to ionizing radiation, thereby improving the dimensional stability of the transfer sheet.

The stretched film may be a uniaxially stretched film or a biaxially stretched film. The stretched film is preferably a biaxially stretched film because the thermal shrinkage during the transfer sheet production and the shrinkage caused by exposure to ionizing radiation are unlikely to occur.

The releasable substrate may have a single-layer structure or a multilayer structure. The releasable substrate may be, for example, a single-layer resin film or a laminate of resin films. The laminate of resin films can be produced by using, for example, a dry lamination method, a wet lamination method, or an extrusion method.

The surface of the releasable substrate on which the surface protective layer is to be disposed may be treated with a known release treatment or may be provided with a release layer, such as a silicone resin, as necessary. This can, for example, improve the releasability between the surface protective layer and the releasable substrate during transfer.

The thickness of the releasable substrate is preferably 5 µm or more, more preferably 10 µm or more, and preferably 200 µm or less, more preferably 150 µm or less, and is, for example, 5 µm or more and 200 µm or less. When the releasable substrate has a multilayer structure, the total thickness of the multilayer structure is preferably in the above thickness range.

In the transfer sheet of the present disclosure, the transfer layer includes the surface protective layer.

The surface protective layer is a layer that forms the surface layer of a weather-resistant article obtained by transferring the transfer layer onto the transfer receptor (transfer receiver, body to be transferred) with the adhesive layer on the transfer receptor as necessary. The surface protective layer is, for example, a layer that imparts weather resistance to the transfer receptor and that may further impart scratch resistance and dirt resistance.

The surface protective layer is preferably in contact with the releasable substrate.

The surface protective layer is disposed on the releasable substrate. In other words, the surface protective layer is stacked to the releasable substrate in the thickness direction. In one embodiment, the surface protective layer is disposed over the entire surface of the releasable substrate.

The surface protective layer contains a cured resin.

The cured resin functions as, for example, a binder in the surface protective layer. Examples of the cured resin include a cured product of a curable compound. Examples of the cured product of the curable compound include a cured product of an ionizing radiation-curable compound and a cured product of a thermosetting resin. The surface protective layer may contain two or more of these cured resins.

Examples of the thermosetting resin include unsaturated group-containing (meth)acrylic resins, unsaturated polyester, urethane resin, epoxy resin, phenolic resin, amino-alkyd resin, urea resin, melamine resin, melamine-urea co-condensation resin, guanamine resin, diallyl phthalate resin, and silicone resin.

The thermosetting resin is used together with a curing agent as necessary. Unsaturated group-containing (meth)acrylic resins and unsaturated polyester are used together with, for example, a peroxide, such as methyl ethyl ketone peroxide, or a radical initiator, such as azoisobutyronitrile. Urethane resin is used together with, for example, an isocyanate curing agent. Epoxy resin is used together with, for example, an organic amine curing agent.

Examples of the thermosetting resin include a two-component curable urethane resin containing a polyol as a main component and an isocyanate compound as a curing agent. Examples of the polyol include (meth)acrylic polyols, polyether polyol, polyester polyol, polyethylene glycol, and polypropylene glycol. Isocyanate compounds are polyvalent isocyanates having two or more isocyanate groups. Examples of the isocyanate compounds include aromatic isocyanates, such as 4,4-diphenylmethane diisocyanate; and aliphatic (or alicyclic) isocyanates, such as hexamethylene diisocyanate, isophorone diisocyanate, hydrogenated tolylene diisocyanate, and hydrogenated diphenylmethane diisocyanate.

In one embodiment, the surface protective layer contains a cured product of a thermosetting resin as a cured resin. The surface protective layer contains, for example, a cross-linked cured product of (meth)acrylic polyol cured by using an isocyanate curing agent.

An ionizing radiation-curable compound means a compound that can be cross-linked and cured by exposure to ionizing radiation, and has an ionizing radiation-curable functional group. The ionizing radiation-curable functional group is a group that can be cross-linked by exposure to ionizing radiation. Examples of the ionizing radiation-curable functional group include ethylenic double bond-containing functional groups (ethylenically unsaturated groups), such as (meth)acryloyl groups, vinyl groups, and allyl groups. Ionizing radiation means electromagnetic waves or charged particle beams that have an energy quantum capable of polymerizing or cross-linking molecules. Examples of the ionizing radiation include electron beams (EB) and UV rays (UV) and also include electromagnetic waves, such as X-rays and γ-rays, and charged particle beams, such as α-rays and ion beams. Since the surface protective layer contains UV absorbers, electron beams are preferred as ionizing radiation.

Examples of the ionizing radiation-curable compound include polymerizable monomers and polymerizable oligomers that have been used as ionizing radiation-curable compounds in the related art.

The polymerizable monomers are preferably (meth)acrylate monomers having a (meth)acryloyl group in the molecule, more preferably multifunctional (meth)acrylate monomers having two or more (meth)acryloyl groups in the molecule. The number of (meth)acryloyl groups in the multifunctional (meth)acrylate monomers is 2 or more, and preferably 8 or less, more preferably 6 or less.

Examples of the polymerizable monomers include bifunctional (meth)acrylates, such as ethylene glycol di(meth)acrylate, propylene glycol di(meth)acrylate, 1,4-butanediol di(meth)acrylate, 1,6-hexanediol di(meth)acrylate, bisphenol A tetraethoxy di(meth)acrylate, and bisphenol A tetrapropoxy di(meth)acrylate; trifunctional or higher (meth)acrylates, such as trimethylolpropane tri(meth)acrylate, pentaerythritol tri(meth)acrylate, pentaerythritol tetra(meth)acrylate, dipentaerythritol tri(meth)acrylate, dipentaerythritol tetra(meth)acrylate, dipentaerythritol penta(meth)acrylate, and dipentaerythritol hexa(meth)acrylate; and ethylene oxide-modified products, propylene oxide-modified products, caprolactone-modified products, isocyanuric acid-modified products, and propionic acid-modified products of these (meth)acrylates.

Examples of the polymerizable oligomers include (meth)acrylate oligomers having two or more (meth)acryloyl groups in the molecule. Examples of the (meth)acrylate oligomers include urethane (meth)acrylate, epoxy (meth)acrylate, polyester (meth)acrylate, polyether (meth)acrylate, polycarbonate (meth)acrylate, polycaprolactone urethane (meth)acrylate, polycaprolactone diol urethane (meth)acrylate, and acrylic (meth)acrylate. The number of (meth)acryloyl groups in the polymerizable oligomers is 2 or more, preferably 8 or less, more preferably 6 or less.

Examples of the polymerizable oligomers further include highly hydrophobic polybutadiene (meth)acrylate oligomers having a (meth)acryloyl group on the side chains of the polybutadiene oligomers, and silicone (meth)acrylate oligomers having a polysiloxane bond on the main chain.

The weight-average molecular weight of the polymerizable oligomers may be 500 or more, 1,000 or more, 2,000 or more, and 10,000 or less, 8,000 or less, 6,000 or less, and may be, for example, 500 or more and 10,000 or less. The weight-average molecular weight is the average molecular weight measured by gel permeation chromatography (GPC) analysis and converted to standard polystyrene.

As ionizing radiation-curable compounds, a monofunctional (meth)acrylate may be used as necessary in combination with a multifunctional (meth)acrylate to reduce the viscosity of the curable composition during coating. Examples of the monofunctional (meth)acrylate include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, lauryl (meth)acrylate, stearyl (meth)acrylate, and isobornyl (meth)acrylate.

When the ionizing radiation-curable compound is a UV-curable compound, the UV-curable compound is preferably used together with at least one selected from photopolymerization initiators and photopolymerization accelerators.

To improve the heat resistance, scratch resistance, and dirt resistance of the surface protective layer, the surface protective layer preferably contains a cured product of a curable compound, more preferably contains a cured product of an ionizing radiation-curable compound. Of ionizing radiation-curable compounds, an electron beam-curable compound is preferred as a component contained in the surface protective layer because the electron beam-curable compound allows a solvent-free system, does not require any photopolymerization initiator, and provides stable curing properties. Of ionizing radiation-curable compounds, polymerizable oligomers are preferred, (meth)acrylate oligomers having two or more (meth)acryloyl groups in the molecule are more preferred, and urethane (meth)acrylate is still more preferred.

The content ratio of the cured resin to all resin components contained in the surface protective layer is preferably 50 mass% or more, more preferably 70 mass% or more, still more preferably 80 mass% or more, particularly preferably 90 mass% or more.

The surface protective layer contains a first UV absorber having an absorption peak at a first wavelength, a second UV absorber having an absorption peak at a second wavelength longer than the first wavelength, and a third UV absorber having an absorption peak at a third wavelength longer than the second wavelength. Each absorption peak is based on the absorbance spectrum measured using a UV-visible-near-infrared spectrophotometer.

The first UV absorber has an absorption peak at the first wavelength. The first wavelength is preferably in the range of 270 nm or more to 300 nm or less, more preferably in the range of 270 nm or more to 290 nm or less, still more preferably in the range of 270 nm or more to 280 nm or less.

The second UV absorber has an absorption peak at the second wavelength. The second wavelength is preferably in the range of 310 nm or more to 330 nm or less, more preferably in the range of 310 nm or more to 325 nm or less.

The third UV absorber has an absorption peak at the third wavelength. The third wavelength is preferably in the range of 340 nm or more to 370 nm or less, more preferably in the range of 345 nm or more to 365 nm or less.

The above absorption peaks preferably mean the maximum absorption peaks in the wavelength range of 270 nm or more to 380 nm or less. For example, when the first UV absorber has multiple absorption peaks in the above wavelength range, the maximum absorption peak is preferably in the range of 270 nm or more to 300 nm or less.

The difference between the second wavelength and the first wavelength is preferably 10 nm or more, more preferably 20 nm or more, still more preferably 30 nm or more, and preferably 60 nm or less, more preferably 55 nm or less, still more preferably 50 nm or less, and is, for example, 10 nm or more and 60 nm or less.

The difference between the third wavelength and the second wavelength is preferably 10 nm or more, more preferably 20 nm or more, still more preferably 30 nm or more, and preferably 60 nm or less, more preferably 55 nm or less, still more preferably 50 nm or less, and is, for example, 10 nm or more and 60 nm or less.

The difference between the third wavelength and the first wavelength is preferably 40 nm or more, more preferably 50 nm or more, still more preferably 60 nm or more, and preferably 100 nm or less, more preferably 95 nm or less, still more preferably 90 nm or less, and is, for example, 40 nm or more and 100 nm or less.

Examples of the first to third UV absorbers include triazine UV absorbers, benzotriazole UV absorbers, and benzophenone UV absorbers. Triazine UV absorbers are preferred from the viewpoint of high weather resistance, absorbance, and wavelength selectivity.

Of triazine UV absorbers, hydroxyphenyltriazine UV absorbers are preferred from the viewpoint of weather resistance. Examples of the hydroxyphenyltriazine UV absorbers include compounds represented by formula (1), compounds represented by formula (2), and compounds represented by formula (3).

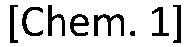

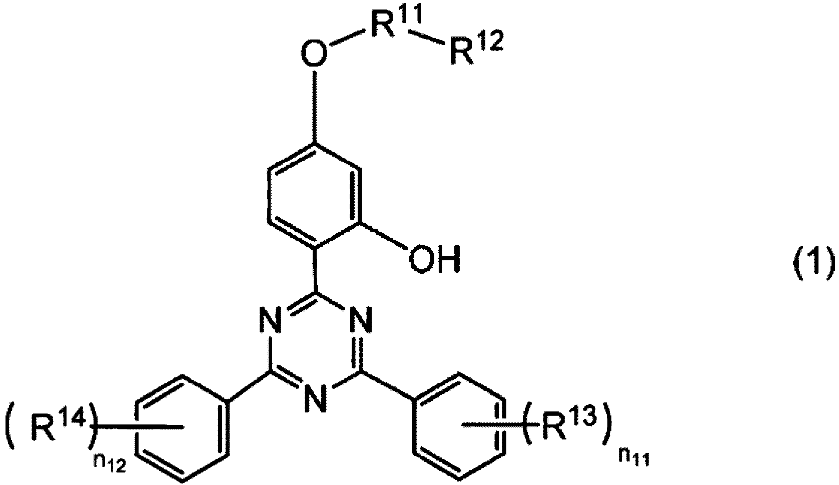

In formula (1), R¹¹ is a divalent organic group, R¹² is an acyloxy group represented by -O-C(=O)R¹⁵, R¹³ and R¹⁴ are each independently a monovalent organic group, R¹⁵ is a hydrogen atom or a monovalent organic group, n₁₁ and n₁₂ are each independently an integer of 0 or more and 5 or less. If there are two or more R¹³s, R¹³s may be the same or different. If there are two or more R¹⁴s, R¹⁴s may be the same or different.

Examples of the divalent organic group R¹¹ include aliphatic hydrocarbon groups, such as alkylene groups and alkenylene groups. Alkylene groups are preferred from the viewpoint of weather resistance. The number of carbon atoms in the aliphatic hydrocarbon groups is preferably 1 or more, more preferably 2 or more, and preferably 16 or less, more preferably 12 or less, still more preferably 8 or less, particularly preferably 4 or less, and is, for example, 1 or more and 16 or less, from the viewpoint of weather resistance. The aliphatic hydrocarbon groups may be linear, branched, or cyclic, and from the viewpoint of weather resistance, preferably linear or branched, more preferably linear.

Examples of the monovalent organic groups R¹³ and R¹⁴ include aliphatic hydrocarbon groups, such as alkyl groups, alkenyl groups, and cycloalkyl groups; and aromatic ring-containing hydrocarbon groups, such as aryl groups and arylalkyl groups. From the viewpoint of weather resistance, aromatic ring-containing hydrocarbon groups are preferred, aryl groups are more preferred, and phenyl groups are particularly preferred.

From the viewpoint of weather resistance, n₁₁ and n₁₂ are each preferably 0.

From the viewpoint of weather resistance, R¹⁵ is preferably a monovalent organic group. Examples of the monovalent organic group include aliphatic hydrocarbon groups, such as alkyl groups, alkenyl groups, and cycloalkyl groups; and aromatic ring-containing hydrocarbon groups, such as aryl groups and arylalkyl groups. From the viewpoint of weather resistance, aliphatic hydrocarbon groups are preferred, and alkyl groups are more preferred. The number of carbon atoms in the aliphatic hydrocarbon groups is preferably 2 or more, more preferably 4 or more, and preferably 16 or less, more preferably 12 or less, still more preferably 10 or less, and is, for example, 2 or more and 16 or less, from the viewpoint of weather resistance. The aliphatic hydrocarbon groups may be linear, branched, or cyclic, and from the viewpoint of weather resistance, preferably linear or branched.

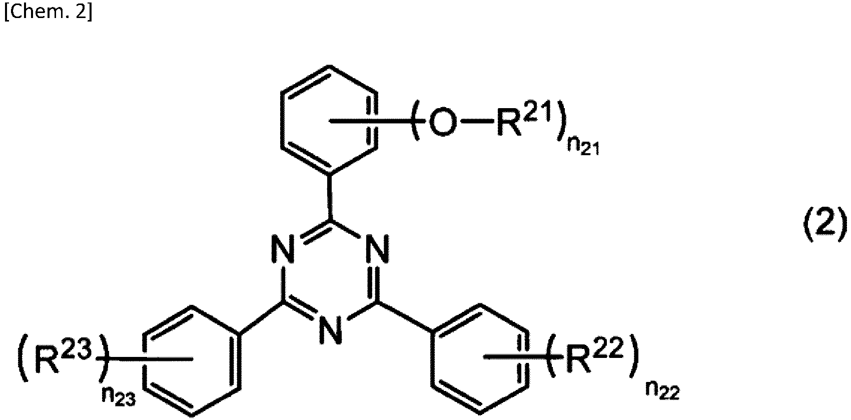

In formula (2), R²¹ is a hydrogen atom or a monovalent organic group, R²² and R²³ are each independently a hydroxyl group or a monovalent organic group, and n₂₁, n₂₂, and n₂₃ are each independently an integer of 1 or more and 5 or less. If there are two or more R²¹s, R²¹s may be the same or different. If there are two or more R²²s, R²²s may be the same or different. If there are two or more R²³s, R²³s may be the same or different.

Examples of the monovalent organic group R²¹ include the groups listed as examples of the monovalent organic groups R¹³ and R¹⁴ in formula (1) and further include groups represented by -R²⁴-C(=O)O-R²⁵. R²⁴ is a divalent organic group, and R²⁵ is a monovalent organic group. Examples of the monovalent organic groups R²² and R²³ include the groups listed as examples of the monovalent organic groups R¹³ and R¹⁴ in formula (1). From the viewpoint of weather resistance, aromatic ring-containing hydrocarbon groups are preferred, aryl groups are more preferred, and phenyl groups are particularly preferred.

Examples of the divalent organic group R²⁴ include the groups listed as examples of the divalent organic group R¹¹ in formula (1). From the viewpoint of weather resistance, aliphatic hydrocarbon groups are preferred, and alkylene groups are more preferred. The number of carbon atoms in the aliphatic hydrocarbon groups is preferably 1 or more, more preferably 2 or more, and preferably 16 or less, more preferably 12 or less, still more preferably 8 or less, particularly preferably 4 or less, and is, for example, 1 or more and 16 or less, from the viewpoint of weather resistance. The aliphatic hydrocarbon groups may be linear, branched, or cyclic, and from the viewpoint of weather resistance, preferably linear or branched, more preferably linear.

Examples of the monovalent organic group R²⁵ include the groups listed as examples of the monovalent organic group R¹⁵ in formula (1). From the viewpoint of weather resistance, aliphatic hydrocarbon groups are preferred, and alkyl groups are more preferred. The number of carbon atoms in the aliphatic hydrocarbon groups is preferably 2 or more, more preferably 4 or more, and preferably 16 or less, more preferably 12 or less, still more preferably 10 or less, and is, for example, 2 or more and 16 or less, from the viewpoint of weather resistance. The aliphatic hydrocarbon groups may be linear, branched, or cyclic, and from the viewpoint of weather resistance, preferably linear or branched.

n₂₁ may be 2 or more, and n₂₂ and n₂₃ may each be 1. In this case, one of R²¹s may be a hydrogen atom, and if R²² and R²³ are monovalent organic groups, R²² and R²³ may be the same organic group.

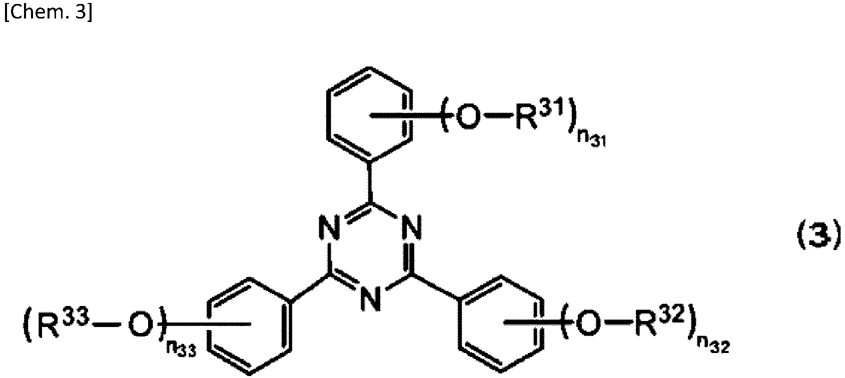

In formula (3), R³¹, R³², and R³³ are each independently a hydrogen atom or a monovalent organic group, and n₃₁, n₃₂, and n₃₃ are each independently an integer of 1 or more and 5 or less. If there are two or more R³¹s, R³¹s may be the same or different. If there are two or more R³²s, R³²s may be the same or different. If there are two or more R³³s, R³³s may be the same or different.

Examples of the monovalent organic groups R³¹, R³², and R³³ include the groups listed as examples of the monovalent organic groups R¹³ and R¹⁴ in formula (1) and further include groups represented by -R³⁴-C(=O)O-R³⁵. R³⁴ is a divalent organic group, and R³⁵ is a monovalent organic group.

Examples of the divalent organic group R³⁴ include the groups listed as examples of the divalent organic group R¹¹ in formula (1). From the viewpoint of weather resistance, aliphatic hydrocarbon groups are preferred, and alkylene groups are more preferred. The number of carbon atoms in the aliphatic hydrocarbon groups is preferably 1 or more, more preferably 2 or more, and preferably 16 or less, more preferably 12 or less, still more preferably 8 or less, particularly preferably 4 or less, and is, for example, 1 or more and 16 or less, from the viewpoint of weather resistance. The aliphatic hydrocarbon groups may be linear, branched, or cyclic, and from the viewpoint of weather resistance, preferably linear or branched, more preferably linear.

Examples of the monovalent organic group R³⁵ include the groups listed as examples of the monovalent organic group R¹⁵ in formula (1). From the viewpoint of weather resistance, aliphatic hydrocarbon groups are preferred, and alkyl groups are more preferred. The number of carbon atoms in the aliphatic hydrocarbon groups is preferably 2 or more, more preferably 4 or more, and preferably 16 or less, more preferably 12 or less, still more preferably 10 or less, and is, for example, 2 or more and 16 or less, from the viewpoint of weather resistance. The aliphatic hydrocarbon groups may be linear, branched, or cyclic, and from the viewpoint of weather resistance, preferably linear or branched.

n₃₁, n₃₂, and n₃₃ may each be 2 or more. In this case, one of R³¹s may be a hydrogen atom, one of R³²s may be a hydrogen atom, and one of R³³s may be a hydrogen atom.

Specific examples of the hydroxyphenyltriazine UV absorbers include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-(4,6-diphenyl-1,3,5-triazin-2-yl)-5-[2-(2-ethylhexanoyloxy)ethoxy]phenol, 2-[4-[(2-hydroxy-3-(2'-ethyl)hexyl)oxy]-2-hydroxyphenyl]-4,6-bis(2,4-dimethylphenyl)-1,3,5-triazine, and compounds represented by the following formula.

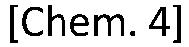

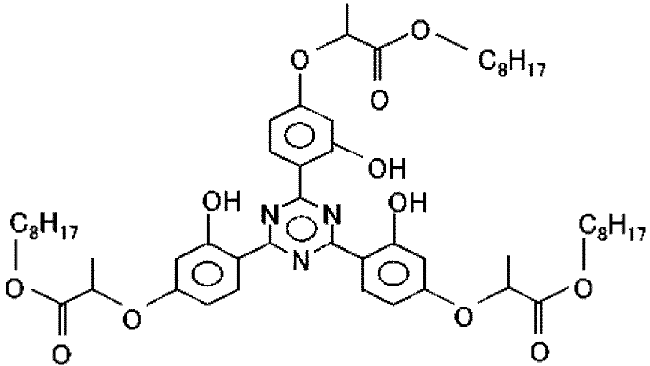

In the surface protective layer, the total amount of the first UV absorber, the second UV absorber, and the third UV absorber relative to 100 parts by mass of the cured resin is preferably 0.5 parts by mass or more, more preferably 1 part by mass or more, still more preferably 2 parts by mass or more, and preferably 10 parts by mass or less, more preferably 8 parts by mass or less, still more preferably 6 parts by mass or less, and is, for example, 0.5 parts by mass or more and 10 parts by mass or less. When the total amount of the UV absorbers is the lower limit or more, the transfer layer tends to have higher weather resistance. When the total amount of the UV absorbers is the upper limit or less, the degradation of adhesion between the surface protective layer and the primer layer caused by bleed-out of the UV absorbers is less likely to occur.

In the surface protective layer, the amount of the first UV absorber relative to 100 parts by mass of the cured resin is preferably 0.1 parts by mass or more, more preferably 0.2 parts by mass or more, still more preferably 0.3 parts by mass or more, and preferably 3 parts by mass or less, more preferably 2 parts by mass or less, still more preferably 1.5 parts by mass or less, and is, for example, 0.1 parts by mass or more and 3 parts by mass or less. This tends to further improve, for example, weather resistance.

In the surface protective layer, the amount of the second UV absorber relative to 100 parts by mass of the cured resin is preferably 0.1 parts by mass or more, more preferably 0.5 parts by mass or more, still more preferably 1 part by mass or more, and preferably 8 parts by mass or less, more preferably 6 parts by mass or less, still more preferably 5 parts by mass or less, and is, for example, 0.1 parts by mass or more and 8 parts by mass or less. This tends to further improve, for example, weather resistance.

In the surface protective layer, the amount of the third UV absorber relative to 100 parts by mass of the cured resin is preferably 0.1 parts by mass or more, more preferably 0.2 parts by mass or more, still more preferably 0.3 parts by mass or more, and preferably 3 parts by mass or less, more preferably 2 parts by mass or less, still more preferably 1.5 parts by mass or less, and is, for example, 0.1 parts by mass or more and 3 parts by mass or less. This tends to further improve, for example, weather resistance.

In the surface protective layer, the amount of the second UV absorber is larger than that of the first UV absorber and larger than that of the third UV absorber in one embodiment. This tends to allow the surface protective layer to absorb a wider range of wavelengths and tends to further improve, for example, weather resistance.

The surface protective layer may contain a light stabilizer from the viewpoint of weather resistance.

Examples of the light stabilizer include aromatic light stabilizers, amine light stabilizers, organic acid light stabilizers, catechin light stabilizers, and hindered amine light stabilizers. Of these light stabilizers, hindered amine light stabilizers are preferred. Hindered amine light stabilizers are, for example, compounds having a structure containing a 2,2,6,6-tetramethylpiperidine skeleton in the molecule.

Examples of the light stabilizer include reactive light stabilizers having an ethylenic double bond and polymerizable with a curable compound that may form the cured resin in the surface protective layer, and non-reactive light stabilizers having no ethylenic double bond and polymerizable with the curable compound. The ethylenic double bond is possessed by functional groups, such as (meth)acryloyl groups, vinyl groups, and allyl groups. The surface protective layer may contain at least one selected from reactive light stabilizers and non-reactive light stabilizers, or may contain a reactive light stabilizer and a non-reactive light stabilizer.

The reactive light stabilizer is typically incorporated into and fixed in the cured resin in forming the surface protective layer and can thus exhibit a long-term effect. The non-reactive light stabilizer can move in the surface protective layer and can thus exhibit an immediate effect.

The number of ethylenic double bonds in the reactive light stabilizer may be one or two or more.

Examples of reactive light stabilizers having one ethylenic double bond include 4-(meth)acryloyloxy-2,2,6,6-tetramethylpiperidine, 4-(meth)acryloylamino-2,2,6,6-tetramethylpiperidine, 4-(meth)acryloyloxy-1,2,2,6,6-pentamethylpiperidine, 4-(meth)acryloylamino-1,2,2,6,6-pentamethylpiperidine, 4-cyano-4-(meth)acryloylamino-2,2,6,6-tetramethylpiperidine, 4-crotonoyloxy-2,2,6,6-tetramethylpiperidine and 4-crotonoylamino-2,2,6,6-tetramethylpiperidine, pentamethylpiperidinyl (meth)acrylate, the compound with CAS number 1010692-24-6, and the compound with CAS number 1010692-21-3. Examples of reactive light stabilizers having two or more ethylenic double bonds include 1-(meth)acryloyl-4-(meth)acryloylamino-2,2,6,6-tetramethylpiperidine, 1-(meth)acryloyl-4-cyano-4-(meth)acryloylamino-2,2,6,6-tetramethylpiperidine, 1-crotonoyl-4-crotoyloxy-2,2,6,6-tetramethylpiperidine, the compound with CAS number 1954659-42-7, and the compound with CAS number 1010692-23-5.

Examples of non-reactive light stabilizers include 4-benzoyloxy-2,2,6,6-tetramethylpiperidine, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidinyl)sebacate, bis(1,2,2,6,6-pentamethyl-4-piperidinyl)sebacate, methyl(1,2,2,6,6-pentamethyl-4-piperidinyl)sebacate, 2,4-bis[N-butyl-N-(1-cyclohexyloxy-2,2,6,6-tetramethyl-4-piperidinyl)amino]-6-(2-hydroxyethylamine)-1,3,5-triazine), tetrakis(1,2,2,6,6-pentamethyl-4-piperidyl)-1,2,3,4-butanetetracarboxylate, and bis-(1,2,2,6,6-pentamethyl-4-piperidyl)-2-(3,5-di-t-butyl-4-hydroxy-benzyl)-2-n-butylmalonate.

In the surface protective layer, the amount of the light stabilizer relative to 100 parts by mass of the cured resin is preferably 0.5 parts by mass or more, more preferably 1 part by mass or more, still more preferably 1.5 parts by mass or more, and preferably 10 parts by mass or less, more preferably 8 parts by mass or less, still more preferably 6 parts by mass or less, and is, for example, 0.5 parts by mass or more and 10 parts by mass or less.

The surface protective layer may contain, as the light stabilizer, only the above reactive light stabilizer, only the above non-reactive light stabilizer, or both the above reactive light stabilizer and the above non-reactive light stabilizer. The blending ratio (reactive light stabilizer:non-reactive light stabilizer) of the above reactive light stabilizer to the above non-reactive light stabilizer in the surface protective layer on a mass basis may be, for example, 10:0 to 2:8.

The surface protective layer may contain additives, such as antioxidants, abrasion resistance improvers, infrared absorbers, antistatic agents, leveling agents, thixotropic agents, coupling agents, defoamers, flame retardants, plasticizers, particles, and blocking inhibitors.

The surface protective layer is preferably substantially free of polyolefin. This tends to further improve, for example, the weather resistance of the surface protective layer. The phrase "substantially free of polyolefin" means that the content ratio of the polyolefin to all resin components contained in the surface protective layer is 1 mass% or less. The content ratio of the polyolefin to all resin components is preferably 0.1 mass% or less, more preferably 0.01 mass% or less, still more preferably 0 mass%.

In the transfer sheet of the present disclosure, the surface protective layer has an absorbance A1 of 0.3 or higher at a wavelength of 270 nm or more and 300 nm or less, an absorbance A2 of 0.6 or higher at a wavelength of 310 nm or more and 330 nm or less, and an absorbance A3 of 0.2 or higher at a wavelength of 340 nm or more and 370 nm or less.

The surface protective layer can efficiently block UV rays, and the transfer layer has higher weather resistance in an environment exposed to direct sunlight when the absorbance A2 at a wavelength of 310 nm or more and 330 nm or less and the absorbance A3 at a wavelength of 340 nm or more and 370 nm or less are considered in addition to the absorbance A1 at a wavelength of 270 nm or more and 300 nm or less from the viewpoint of long-term weather resistance as described above.

The absorbance A1 is preferably 0.3 or more, more preferably 0.35 or more and may be, for example, 0.5 or more or 0.7 or more. The upper limit of the absorbance A1 is not limited, but may be, for example, 1.5.

The absorbance A2 is preferably 0.6 or more, more preferably 0.7 or more and may be, for example, 1.0 or more or 1.2 or more. The upper limit of the absorbance A2 is not limited, but may be, for example, 3.0.

The absorbance A3 is preferably 0.2 or more, more preferably 0.25 or more and may be, for example, 0.5 or more or 0.7 or more. The upper limit of the absorbance A3 is not limited, but may be, for example, 1.5.

The absorbances A1, A2 and A3 can be adjusted by, for example, changing the amounts of the first to third UV absorbers in the surface protective layer and the thickness of the surface protective layer. For example, the absorbance can be easily adjusted by the surface protective layer containing the first to third UV absorbers.

In one embodiment, the absorbance of the surface protective layer in the wavelength range of 270 nm or more to 370 nm or less includes a maximum value in the range of 300 nm or more to 340 nm or less. This tends to further improve, for example, the long-term weather resistance of the transfer layer.

Each absorbance is measured as follows.

The average absorbance of the surface protective layer in the wavelength range of 270 nm or more to 300 nm or less in accordance with JIS K 0115:2004 is defined as the absorbance A1. The average absorbance is obtained by measuring the absorbance at 1 nm intervals in the wavelength range of 270 nm or more to 300 nm or less.

The average absorbance of the surface protective layer in the wavelength range of 310 nm or more to 330 nm or less in accordance with JIS K 0115:2004 is defined as the absorbance A2. The average absorbance is obtained by measuring the absorbance at 1 nm intervals in the wavelength range of 310 nm or more to 330 nm or less.

The average absorbance of the surface protective layer in the wavelength range of 340 nm or more to 370 nm or less in accordance with JIS K 0115:2004 is defined as the absorbance A3. The average absorbance is obtained by measuring the absorbance at 1 nm intervals in the wavelength range of 340 nm or more to 370 nm or less.

The absorbance of the surface protective layer of the transfer sheet can be measured as follows. The layer(s) (e.g., the primer layer and the adhesive layer) outside the surface protective layer of the transfer layer in the transfer sheet is/are removed by cutting or by using a solvent, and the absorbance of the remaining laminate is measured. The absorbance of the releasable substrate alone is then measured. The absorbance of the releasable substrate alone is subtracted from the absorbance of the remaining laminate to obtain the absorbance of the surface protective layer.

In one embodiment, the surface protective layer can be formed by preparing a curable composition, applying the composition to the releasable substrate to form an uncured resin layer, and cross-linking and curing the uncured resin layer. For example, the cross-linking curing is carried out by heat treatment in the case of using a thermosetting resin, and the cross-linking curing is carried out by exposure to ionizing radiation, such as electron beams and UV rays, in the case of using an ionizing radiation-curable compound.

When electron beams are used as ionizing radiation, the exposure dose is, for example, 5 kGy or more and 300 kGy or less (0.5 Mrad or more and 30 Mrad or less), preferably 10 kGy or more and 100 kGy or less (1 Mrad or more and 10 Mrad or less). When UV rays are used as ionizing radiation, rays including UV rays with wavelengths from 190 nm or more to 380 nm or less may be emitted.

From the viewpoint of balance between processability, scratch resistance, and weather resistance, the thickness of the surface protective layer is preferably 1 µm or more, more preferably 1.5 µm or more, still more preferably 2 µm or more, and preferably 20 µm or less, more preferably 15 µm or less, still more preferably 10 µm or less, and is, for example, 1 µm or more and 20 µm or less.

In the transfer sheet of the present disclosure, the transfer layer includes a primer layer. The primer layer can be provided for the purpose of, for example, improving the adhesion between the surface protective layer and the adhesive layer.

In one embodiment, the primer layer contains a resin component.

Examples of the resin component include vinyl chloride-vinyl acetate copolymer, vinyl chloride-vinyl acetate-(meth)acrylate copolymer, chlorinated polyethylene, chlorinated polypropylene, urethane resin, (meth)acrylic resin, (meth)acrylic polyol resin, polystyrene, polyester, polyamide, butyral resin, nitrocellulose, and cellulose acetate. The resin component may be a cross-linked cured product of such a resin cured by using a curing agent. The resin component may be, for example, a cured product of the two-component curable urethane resin described above.

The urethane resin is preferably a urethane resin having a (meth)acrylic skeleton in the polyurethane polymer chain from the viewpoint of weather resistance and durability. Examples of the urethane resin having a (meth)acrylic skeleton in the polyurethane polymer chain include a urethane-(meth)acrylate copolymer, which is a copolymer of a urethane component and a (meth)acrylate component, and a resin including a (meth)acrylic resin having a hydroxy group or an isocyanate group as a polyol component or a polyisocyanate component included in polyurethane. Of these, a urethane-(meth)acrylate copolymer is preferred. The urethane-(meth)acrylate copolymer is preferably, for example, urethane-(meth)acrylate block copolymer.

From the viewpoint of adhesion between the primer layer and the surface protective layer, the urethane-(meth)acrylate copolymer may further have a polycarbonate skeleton or a polyester skeleton in the polyurethane polymer chain. Examples of the urethane-(meth)acrylate copolymer include a polycarbonate urethane-(meth)acrylate copolymer, which is a copolymer of a polycarbonate urethane component and a (meth)acrylate component, and a polyester urethane-(meth)acrylate copolymer, which is a copolymer of a polyester urethane component and a (meth)acrylate component.

A urethane-(meth)acrylate copolymer can be produced by, for example, causing a (meth)acrylic resin having at least two hydroxy groups per molecule to react with a polyol and a polyisocyanate (see, for example, Japanese Unexamined Patent Application Publication No. 6-100653), or by causing a urethane prepolymer having unsaturated double bonds at both ends to react with a (meth)acrylate monomer (see, for example, Japanese Unexamined Patent Application Publication No. 10-1524).

Examples of the urethane prepolymer include a polycarbonate urethane prepolymer obtained by causing a polycarbonate diol to react with a diisocyanate, and a polyester urethane prepolymer obtained by causing a polyester diol to react with a diisocyanate. Examples of the diisocyanate include aliphatic isocyanates, such as hexamethylene diisocyanate; and alicyclic isocyanates, such as isophorone diisocyanate and hydrogenated xylylene diisocyanate. Examples of the (meth)acrylate monomer include (meth)acrylic acid, and C1-C6 alkyl esters of (meth)acrylic acid.

Specific examples of the urethane resin include a polycarbonate urethane-(meth)acrylate copolymer, a polyester urethane-(meth)acrylate copolymer, a polyether urethane-(meth)acrylate copolymer, and a caprolactone urethane-(meth)acrylate copolymer. These resin components are preferred to improve weather resistance and further improve the adhesion between the surface protective layer and the adhesive layer.

The urethane component/(meth)acrylate component (mass ratio) in the urethane resin is preferably 20/80 or more and 99/1 or less, more preferably 50/50 or more and 95/5 or less, still more preferably 70/30 or more and 95/5 or less. This can further improve, for example, weather resistance. The amount of the (meth)acrylate component in the urethane resin is the ratio of the monomer unit constituting the (meth)acrylic skeleton to the total mass of the urethane resin. The amount of the (meth)acrylate component in the urethane resin is obtained by measuring the NMR spectrum of the urethane resin and determining the ratio of the peak area assigned to the (meth)acrylate component to the total peak area.

The weight-average molecular weight of the urethane resin may be 10,000 or more, 30,000 or more, and 100,000 or less, 80,000 or less and may be, for example 10,000 or more and 100,000 or less. This can further improve, for example, weather resistance. The weight-average molecular weight in this description is obtained as a standard polystyrene equivalent-value by gel permeation chromatography (GPC).

The content ratio of the resin component in the primer layer is, for example, 50 mass% or more.

The primer layer may contain UV absorbers, such as the first to third UV absorbers described above. The primer layer may contain the light stabilizers described above. The primer layer may contain the additives described above.

When the primer layer contains a UV absorber, the amount of the UV absorber in the primer layer relative to 100 parts by mass of the resin component contained in the primer layer may be 1 part by mass or more, 5 parts by mass or more, 10 parts by mass or more, and 50 parts by mass or less, 45 parts by mass or less, 40 parts by mass or less, and may be, for example, 1 part by mass or more and 50 parts by mass or less.

When the primer layer contains a light stabilizer, the amount of the light stabilizer in the primer layer relative to 100 parts by mass of the resin component contained in the primer layer may be 0.1 parts by mass or more, 0.5 parts by mass or more, 1 part by mass or more, and 10 parts by mass or less, 8 parts by mass or less, 6 parts by mass or less, and may be, for example, 0.1 parts by mass or more and 10 parts by mass or less.

The thickness of the primer layer is preferably 0.1 µm or more, more preferably 0.5 µm or more, still more preferably 1 µm or more, and preferably 10 µm or less, more preferably 8 µm or less, still more preferably 6 µm or less, and is, for example, 0.1 µm or more and 10 µm or less.

To improve the adhesion between the surface protective layer and the primer layer, the surface protective layer may be surface-treated before the primer layer is formed. Examples of the surface treatment method include corona discharge treatment, plasma treatment, chromium oxidation treatment, flame treatment, hot-air treatment, and ozone/UV treatment.

To improve the adhesion between the surface protective layer and the primer layer, the surface protective layer may be cross-linked and cured in a semi-cured state, and the resin composition for the primer layer may be then applied to the semi-cured surface protective layer, followed by exposure to ionizing radiation to completely cure the surface protective layer.

When the resin composition for the primer layer is applied onto the surface protective layer to form the primer layer after the surface protective layer is cured, it may be difficult to sufficiently improve the adhesion between the primer layer and the surface protective layer. In such a case, for example, the primer layer is easily peeled from the surface protective layer if the primer layer deteriorates under UV irradiation in an environment exposed to direct sunlight. In the present disclosure, such peeling is unlikely to occur because the deterioration of the primer layer can be suppressed over a long period of time, as described above.

In the transfer sheet of the present disclosure, the transfer layer may include a design layer.

The transfer layer may include a design layer between the primer layer and the adhesive layer.

The design layer may be placed on part or all of a surface of the primer layer on the side opposite from the surface protective layer. The design layer may cover the entire surface of the primer layer on the side opposite from the surface protective layer and may have a pattern including design regions and non-design regions on the surface of the primer layer on the side opposite from the surface protective layer.

The design layer can be disposed to display a design. The design layer has, for example, a design. Examples of the design include wood grain patterns that imitate annual rings or xylem grooves on the surface of wood boards, stone patterns that imitate the surface of rocks, such as marble and granite, fabric patterns that imitate texture or cloth patterns, leather grain patterns that imitate the surface of leather, Nashiji (pear skin) patterns, tile patterns, brick bonding patterns, geometric patterns, as well as abstract patterns, such as letters, figures, symbols, polka dots, and flower patterns. The pattern can be a single solid color (so-called solid image). The pattern may be a composite pattern including two or more of these patterns. The design layer may have two or more layers. For example, the design layer may have a colored first layer and a second layer disposed on the first layer to form a design.

The design layer can be formed, for example, by a printing method or a coating method. Examples of the printing method include gravure printing, offset printing, silk screen printing, printing by transfer from a transfer sheet, and inkjet printing. Examples of the coating method include gravure coating, gravure reverse coating, gravure offset coating, spinner coating, roll coating, and reverse roll coating. Each of the other layers can also be formed, for example, by these methods.

In one embodiment, the design layer contains a resin component and a colorant.

Examples of the resin component include vinyl chloride-vinyl acetate copolymer, vinyl chloride-vinyl acetate-(meth)acrylate copolymer, chlorinated polyethylene, chlorinated polypropylene, urethane-(meth)acrylate copolymer, (meth)acrylic resin, (meth)acrylate polyol resin, polystyrene, polyurethane, polyester, polyamide, butyral resin, nitrocellulose, and cellulose acetate.

Examples of the colorant include pigments and dyes. Specific examples include inorganic pigments, such as carbon black, iron black, titanium white, antimony white, yellow lead, titanium yellow, red iron oxide, cadmium red, ultramarine, and cobalt blue; organic pigments or dyes, such as quinacridone red, isoindolinone yellow, phthalocyanine blue, azomethine azoblack, and nickel azo complex; metal pigments composed of foil flakes of aluminum, brass, and other materials; and pearlescent (pearl) pigments composed of foil flakes of titanium dioxide-coated mica, basic lead carbonate, and other materials.

The amount of the colorant in the design layer relative to 100 parts by mass of the resin component contained in the design layer may be 5 parts by mass or more, 15 parts by mass or more, 30 parts by mass or more, and 200 parts by mass or less, 150 parts by mass or less, 100 parts by mass or less, and may be, for example, 5 parts by mass or more and 200 parts by mass or less.

The design layer may contain additives. Examples of the additives include UV absorbers, light stabilizers, antioxidants, fillers, defoamers, flame retardants, plasticizers, and lubricants. To improve weather resistance, the design layer may contain weathering agents, such as UV absorbers, light stabilizers, and antioxidants.

The thickness of the design layer is preferably 0.5 µm or more, more preferably 1 µm or more, still more preferably 2 µm or more, and preferably 20 µm or less, more preferably 15 µm or less, still more preferably 10 µm or less, and is, for example, 0.5 µm or more and 20 µm or less. This can further improve, for example, design quality.

The design layer may have a metal thin film. Examples of the metal that constitutes the metal thin film include tin, indium, chromium, aluminum, nickel, iron, cobalt, copper, silver, gold, platinum, and zinc, and alloys containing at least one selected from these metals. Examples of the alloys include brass, bronze, and stainless steel. Examples of the method for forming the metal thin film include vacuum deposition, sputtering, and ion plating. The thickness of the metal thin film is, for example, 0.1 µm or more and 1 µm or less.

The adhesive layer may also function as a design layer.

In the transfer sheet of the present disclosure, the transfer layer may include an adhesive layer.

The adhesive layer has a function of ensuring adhesion between the transfer sheet and the surface of the transfer receptor. In one embodiment, the adhesive layer forms a surface layer of the transfer layer on the side opposite from the releasable substrate. The adhesive layer comes in contact with the transfer receptor after transfer. As a result, the transfer layer can be favorably transferred and attached to the transfer receptor.

In the present disclosure, the transfer sheet is attached to the transfer receptor such that the adhesive layer is in contact with the surface of the transfer receptor, and the releasable substrate is then peeled off, whereby the transfer layer including the surface protective layer and primer layer can be transferred from the transfer sheet onto the transfer receptor such that the transfer layer comes in close contact with the transfer receptor.

Suitable examples of the adhesive resin that can be used in the adhesive layer include heat-fusible resins, such as (meth)acrylic resins, polyolefin, chlorinated polyolefin, vinyl chloride-vinyl acetate copolymer, polyamide, polyester, chlorinated rubber, urethane resin, epoxy resin, and styrene resin. Among these, (meth)acrylate resins, such as polymethyl methacrylate resin, are preferred to improve weather resistance.

The content ratio of the adhesive resin in the adhesive layer is preferably 50 mass% or more, more preferably 60 mass% or more, still more preferably 70 mass% or more.

The adhesive layer may contain additives. Examples of the additives include weathering agents, such as a UV absorber and a light stabilizer, abrasion resistance improvers, infrared absorbers, antistatic agents, adhesion improvers, leveling agents, thixotropic agents, coupling agents, plasticizers, defoamers, fillers, and colorants.

The adhesive layer may contain a weathering agent. The details of the weathering agent are as described above.

The amount of the UV absorber in the adhesive layer relative to 100 parts by mass of the adhesive resin may be 0.1 parts by mass or more, 1 part by mass or more, 3 parts by mass or more, and 25 parts by mass or less, 20 parts by mass or less, 15 parts by mass or less, and may be, for example, 0.1 parts by mass or more and 25 parts by mass or less. The amount of the light stabilizer in the adhesive layer relative to 100 parts by mass of the adhesive resin may be 0.05 parts by mass or more, 0.5 parts by mass or more, 1 part by mass or more, and 7 parts by mass or less, 5 parts by mass or less, and may be, for example, 0.05 parts by mass or more and 7 parts by mass or less.

The thickness of the adhesive layer is preferably 1 µm or more, and preferably 12 µm or less, more preferably 6 µm or less, and is, for example, 1 µm or more and 12 µm or less. As a result, for example, the adhesive layer allows the transfer layer to adhere to the transfer receptor well and can ensure high transparency.

The thickness of the adhesive layer is preferably larger than the thickness of the primer layer.

The adhesive layer can be formed, for example, by applying a composition (composition for the adhesive layer) containing components that constitute the adhesive layer onto the primer layer and drying the composition as necessary.

The transfer sheet of the present disclosure may include a cover film (protective film) on the adhesive layer.

Specifically, a cover film may be attached onto the adhesive layer. The cover film can protect the surface of the adhesive layer well, which is preferred in terms of storage of the transfer sheet. When the transfer sheet is used, the cover film is peeled off from the adhesive layer to expose the adhesive layer, and the transfer sheet is attached to the transfer receptor using this adhesive layer.

The cover film is made of, for example, a resin component, such as polyolefin.

The weather-resistant article of the present disclosure includes a transfer receptor and a surface protective film disposed on at least part of a surface of the transfer receptor. The surface protective film is a transfer layer in the transfer sheet of the present disclosure, and the surface protective layer included in the transfer layer constitutes at least part of a surface layer of the weather-resistant article.

In one embodiment, as illustrated in Fig. 3, a weather-resistant article 2 includes the transfer receptor 30 and the transfer layer 20 disposed on the surface of the transfer receptor 30. In the embodiment in Fig. 3, the transfer layer 20 includes the adhesive layer 26, a primer layer 24, and the surface protective layer 22 in this order from the transfer receptor 30 side. The weather-resistant article 2 thus includes the adhesive layer 26, the primer layer 24, and the surface protective layer 22 in this order on the transfer receptor 30. The releasable substrate 10 has been peeled off when the weather-resistant article 2 is used.

The transfer receptor (transfer receiver, body to be transferred) is an article to which the transfer layer of the transfer sheet of the present disclosure is transferred.

The transfer receptor is, for example, an exterior material. The exterior material to which the transfer layer of the transfer sheet of the present disclosure has been transferred can maintain high weather resistance even after being exposed to outdoor harsh conditions.

The exterior material is a molded body used outdoors, such as a molded body for applications requiring weather resistance against daily exposure to direct sunlight. The transfer layer in the transfer sheet of the present disclosure is suitable for exterior materials because of its high weather resistance. The exterior material may have any shape. Examples of the shape of the exterior material include boards, such as flat boards and curved boards, three-dimensional articles, sheets, and films. Examples of the exterior material include resin members, wooden members, and inorganic members.

Examples of the resin members include sheets, boards, and three-dimensional articles made of polyolefin, polyvinyl chloride resin, styrene resin, (meth)acrylic resins, polyester, polycarbonate, polyamide, polyimide, cellulose resin, phenol resin, rubber, and other materials.

Examples of the wooden members include boards and three-dimensional articles made of wood veneer, wood plywood, particleboard, wood fiberboard, such as medium density fiberboard (MDF) and laminated wood.

Examples of the inorganic members include metal members and other inorganic members. Examples of the metal members include sheets, boards, and three-dimensional articles made of iron, aluminum, copper, tin, titanium, and alloys (e.g., carbon steel, stainless steel, duralumin, brass, and bronze) containing at least one of these metals. Examples of other inorganic members include boards and three-dimensional articles made of glass, ceramics, such as porcelain, non-cement ceramic materials, such as gypsum, and autoclaved lightweight aerated concrete (ALC) panels.

Examples of the exterior material include exterior materials for building structures, exterior materials for vehicles, ships, and aircraft, exterior materials for industrial machines, and various lenses. Examples of exterior materials (building materials) for building structures include exterior walls, roofs, soffits, floors, fences, various doors, such as entrance doors and gates, window materials, handrails, balcony partitions, roof members for terraces or carports, agricultural greenhouses, and soundproof walls and windbreak walls for local roads and highways. Examples of vehicle exterior materials include materials for windows, such as side windows, rear windows, roof windows, front windows, and quarter windows; headlight covers, turn signal lamp lenses, reflectors; and pillars. Examples of vehicles include automobiles, railcars, construction machines, and light vehicles, such as golf carts. Examples of exterior materials for industrial machines include materials of sight windows for machine tools. Examples of lenses include lenses in traffic signals.

The thickness of the exterior material is selected according to the intended use and the materials. In one embodiment, the thickness of the exterior material may be 0.1 mm or more, 0.3 mm or more, 0.5 mm or more, and 10 mm or less, 5 mm or less, 3 mm or less, and may be, for example, 0.1 mm or more and 10 mm or less.

The above transfer receptor is not limited to exterior materials. Examples of the transfer receptor further include interior materials for vehicles, ships, and aircraft, interior materials for building structures, front panels for various display devices, curve mirrors, traffic signs, and name plates.

The transfer receptor may be, for example, decorative material such as a decorative board.

The weather-resistant article of the present disclosure is obtained, for example, by using the transfer sheet of the present disclosure and transferring the transfer layer of the transfer sheet onto at least part of the surface of the transfer receptor. In one embodiment, the method for producing the weather-resistant article of the present disclosure includes a step of preparing the transfer sheet of the present disclosure and the transfer receptor, a step of placing the transfer sheet on the transfer receptor with the transfer layer in the transfer sheet facing the transfer receptor, and a step of peeling off the releasable substrate in the transfer sheet.

In one embodiment, the transfer receptor and the transfer sheet of the present disclosure including the transfer layer including the surface protective layer, the primer layer, and the adhesive layer are prepared, and the transfer sheet is placed on at least part of the surface of the transfer receptor such that the adhesive layer in the transfer sheet comes in contact with the surface of the transfer receptor.

In one embodiment, the transfer sheet of the present disclosure including the transfer layer including the surface protective layer and the primer layer, and a transfer receptor having an adhesive layer on its surface are prepared, and the transfer sheet is placed on at least part of the surface of the transfer receptor such that the transfer layer in the transfer sheet comes in contact with the adhesive layer on the transfer receptor. Examples of the adhesive layer disposed on the transfer receptor includes an adhesive layer that can be provided in the transfer layer of the transfer sheet.

The above placement may be performed under heat and/or pressure. Next, the releasable substrate in the transfer sheet is peeled off from the transfer layer, specifically from the surface protective layer. The weather-resistant article is produced accordingly. Examples of the transfer method include thermal transfer methods, such as a roll transfer method and a press transfer method, and an in-mold molding method.

The releasable substrate may be used as a protective film in the weather-resistant article without being immediately peeled off from the transfer layer. In such a case, the releasable substrate is peeled off from the transfer layer before use of the weather-resistant article.

After the transfer sheet is placed on the surface of the transfer receptor, the resulting weather-resistant article may be further subjected to processing, such as bending. The processing may be performed either before or after the releasable substrate is peeled off.

The weather-resistant article of the present disclosure may be produced, for example, by simultaneously forming the transfer receptor and placing the transfer sheet. For example, the resin is injected onto the adhesive layer of the transfer sheet to unify the transfer sheet and a resin molded body (injection molded body) serving as the transfer receptor. Next, the releasable substrate is peeled off from the transfer layer. Examples of the method for forming the resin molded body in this case include various injection molding methods, such as in-mold molding, insert molding, injection molding simultaneous decoration, blow molding, and gas injection molding.

The present disclosure relates to, for example, the following [1] to [15].
[1] A transfer sheet including a releasable substrate and a transfer layer, wherein the transfer layer includes a surface protective layer and a primer layer, the surface protective layer is located between the releasable substrate and the primer layer, and the surface protective layer contains a cured resin, a first UV absorber having an absorption peak at a first wavelength, a second UV absorber having an absorption peak at a second wavelength longer than the first wavelength, and a third UV absorber having an absorption peak at a third wavelength longer than the second wavelength.
[2] The transfer sheet according to [1], wherein a difference between the second wavelength and the first wavelength is 10 nm or more, and a difference between the third wavelength and the second wavelength is 10 nm or more.
[3] The transfer sheet according to [1] or [2], wherein the second wavelength is in a range of 310 nm or more to 330 nm or less.
[4] The transfer sheet according to any one of [1] to [3], wherein the first wavelength is in a range of 270 or more nm to 300 nm or less.
[5] The transfer sheet according to any one of [1] to [4], wherein the third wavelength is in a range of 340 or more nm to 370 nm or less.
[6] The transfer sheet according to any one of [1] to [5], wherein in the surface protective layer, an amount of the second UV absorber is larger than that of the first UV absorber and larger than that of the third UV absorber.
[7] The transfer sheet according to any one of [1] to [6], wherein the first UV absorber, the second UV absorber, and the third UV absorber are each independently a triazine UV absorber.
[8] The transfer sheet according to any one of [1] to [7], wherein the surface protective layer contains a total of 0.5 parts by mass or more and 10 parts by mass or less of the first UV absorber, the second UV absorber, and the third UV absorber relative to 100 parts by mass of the cured resin contained in the surface protective layer.
[9] The transfer sheet according to any one of [1] to [8], wherein the surface protective layer contains, relative to 100 parts by mass of the cured resin contained in the surface protective layer, 0.1 parts by mass or more and 3 parts by mass or less of the first UV absorber, 0.1 parts by mass or more and 8 parts by mass or less of the second UV absorber, and 0.1 parts by mass or more and 3 parts by mass or less of the third UV absorber.
[10] The transfer sheet according to any one of [1] to [9], wherein the primer layer contains a UV absorber.
[11] The transfer sheet according to any one of [1] to [10], wherein the transfer layer further includes a design layer.
[12] The transfer sheet according to any one of [1] to [11], wherein the transfer layer further includes an adhesive layer as a surface layer on a side opposite from the releasable substrate.
[13] The transfer sheet according to any one of [1] to [12], wherein the transfer sheet is for transferring the transfer layer onto at least part of a surface of an exterior material.
[14] A weather-resistant article including: a transfer receptor; and a surface protective film disposed on at least part of a surface of the transfer receptor, wherein the surface protective film is the transfer layer in the transfer sheet according to any one of [1] to [13], and the surface protective layer in the transfer layer constitutes at least part of a surface layer of the weather-resistant article.
[15] The weather-resistant article according to [14], wherein the transfer layer includes an adhesive layer, or an adhesive layer is disposed between the transfer layer and the transfer receptor.

### EXAMPLE

The transfer sheet of the present disclosure will be described below in more detail by way of Example, but the transfer sheet of the present disclosure is not limited by Example.

### [Example 1]

An untreated matte PET film (PET base film DIAFOIL E130-26, Mitsubishi Chemical Corporation) was prepared as a releasable substrate. About 5 g of the ionizing radiation-curable resin composition describe below was applied to the releasable substrate to form an uncured resin layer, and the uncured resin layer was cured by exposure to an electron beam (acceleration voltage: 175 kV, exposure dose: 5 Mrad (50 kGy)) to form a surface protective layer with a thickness of 5 µm. The surface protective layer was treated with corona discharge. About 2.5 g of the primer layer resin composition described below was applied to the surface protective layer after the corona discharge treatment by using the gravure printing method and dried to form a primer layer with a thickness of 3.5 µm. About 5 g of a heat-fusible resin (polymethyl methacrylate resin (PMMA), molecular weight: about 96,000) was applied onto the primer layer to form an adhesive layer (heat seal layer) with a thickness of 4.5 µm. The adhesive layer (heat seal layer) was then allowed to cure at room temperature for 24 hours.

The transfer sheet was produced as described above. The transfer sheet includes the PET film, which serves as a releasable substrate, and a transfer layer on the PET film. The transfer layer includes the surface protective layer, the primer layer, and the adhesive layer.

<lonizing Radiation-Curable Resin Composition>

| | | |
|---|---|---|
| · Trifunctional urethane acrylate oligomer with a weight-average molecular weight of 4,000 | | 100 parts by mass |
| · First UV absorber | | 0.5 parts by mass |
| | Hydroxyphenyl triazine UV absorber, | |
| | Product name: ADK STAB LA-46, ADEKA Corporation, | |
| | Absorption peak wavelength: 275 nm | |
| · Second UV absorber | | 3 parts by mass |
| | Hydroxyphenyl triazine UV absorber, | |
| | Product name: TINUVIN 479, BASF | |
| | Absorption peak wavelength: 322 nm | |
| · Third UV absorber | | 0.5 parts by mass |
| | Hydroxyphenyl triazine UV absorber, | |
| | Product name: TINUVIN 477, BASF, | |
| | Absorption peak wavelength: 356 nm | |
| · Hindered amine reactive light stabilizer | | 3 parts by mass |
| | Product name: Sunol LS-3410, Nippon Nyukazai Co., Ltd. | |
| | 1,2,2,6,6-pentamethyl-4-piperidyl-methacrylate | |

### <Primer Layer Resin Composition>

| | | |
|---|---|---|
| · Polycarbonate urethane-acrylate copolymer | | 100 parts by mass |
| | (urethane component/acrylate component = 70/30 (mass ratio)) | |
| · Hydroxyphenyl triazine UV absorber | | 30 parts by mass |
| | (product name: Tinuvin 479 (2-(2-hydroxy-4-[1-octyloxycarbonylethoxy]phenyl)-4,6-bis(4-phenylphenyl)-1,3,5-triazine, BASF) | 15 parts by mass, |
| | product name: Tinuvin 400 (2-[4-[(2-hydroxy-3-dodecyloxypropyl)oxy]-2-hydroxyphenyl]-4,6-bis(2,4-dimethylphenyl)-1,3,5-triazine, BASF) | 15 parts by mass) |
| · Hindered | amine light stabilizer | 3.5 parts by mass |
| | (product name: Tinuvin 123 (BASF), bis(1-octyloxy-2,2,6,6-tetramethyl-4-piperidinyl)sebacate) | |

### [Comparative Example 1]

A transfer sheet was produced in the same manner as in Example 1 except that, in the ionizing radiation-curable resin composition, no first UV absorber was contained, the amount of the second UV absorber (TINUVIN 479) was changed to 1 part by mass, the amount of the third UV absorber (TINUVIN 477) was changed to 3 parts by mass, and no hindered amine reactive light stabilizer was contained.

### [Absorbance]

A surface protective layer was formed on the PET film under the same conditions as above to prepare a test piece. Using a UV-visible-near-infrared spectrophotometer (product name: UH-4150, available from Hitachi, Ltd.), the absorbance of the test piece in each wavelength range was measured in accordance with JIS K 0115:2004. From this absorbance, the absorbance of the PET film was subtracted to obtain the "absorbance A1", "absorbance A2", and "absorbance A3" described above.

Each absorbance of the surface protective layer in the transfer sheet of Example 1 was as follows.
Absorbance A1: 1.2
Absorbance A2: 1.6
Absorbance A3: 1.4

Each absorbance of the surface protective layer in the transfer sheet of Comparative Example 1 was as follows.
Absorbance A1: 0.25
Absorbance A2: 0.6
Absorbance A3: 1.2

### [Transfer]

The transfer sheets produced in Example and Comparative Example and a polycarbonate plate with a thickness of 2 mm serving as a transfer receptor were prepared. No weathering agent was added to the polycarbonate plate. The transfer sheet was stacked on one side of the polycarbonate plate heated to 130°C such that the adhesive layer of the transfer sheet came in contact with the polycarbonate plate, and the transfer sheet and the polycarbonate plate were pressed together using a roll at 160°C. This process produced a releasable substrate-attached molded body including the polycarbonate plate, the adhesive layer, the primer layer, the surface protective layer, and the releasable substrate in this order. Next, the releasable substrate was peeled off from the transfer layer of the transfer sheet to obtain a test piece. The surface protective layer forms one surface layer of the test piece.

### [Weather Resistance]

Using the super-accelerated weathering tester described below, the test piece was subjected to 800 hours of a super-accelerated weathering test (a test in which the following cycle is repeated: one cycle includes 20 hours of exposure to UV irradiation under the following exposure conditions, and 4 hours of condensation under the following condensation conditions after the 20 hours of exposure to UV irradiation).

### <Super-Accelerated Weathering Tester>

A super-accelerated weathering tester (product name: EYE Super UV Tester SUV-W261, available from Iwasaki Electric Co. Ltd.) equipped with a UV lamp (product name: M04-L21WB/SUV, Iwasaki Electric Co., Ltd.), a lamp jacket (product name: WJ50-SUV, Iwasaki Electric Co., Ltd.) and an illuminometer (product name: UVD-365PD, Iwasaki Electric Co., Ltd.).

### <Exposure Conditions>

· Black panel temperature: 63°C
· Illuminance: 100 mW/cm²
· Humidity in chamber: 50%RH
· Time: 20 hours

### <Condensation Conditions>

· Illuminance: 0 mW/cm²
· Humidity in chamber: 98%RH
· Time: 4 hours

### [Evaluation of Adhesion]

After the weathering test for 800 hours, the test piece was subjected to a Cellotape peeling test, and the occurrence of peeling of the surface protective layer was visually observed and evaluated as follows. In the Cellotape peeling test, a cellophane adhesive tape available from Nichiban Co. Ltd., product name Cellotape (registered trademark), was applied to the test area, 1.5 cm × 1.5 cm, of a surface of the test piece on the surface protective layer side and pulled vigorously towards the operator at an angle of 45 degrees.
A: The surface protective layer was not peeled.
B: The surface protective layer was peeled in a region of less than 50% of the test area.
C: The surface protective layer was peeled in a region of 50% or more of the test area.

The results were as follows.

### · Example 1: A

### · Comparative Example 1: B

It should be understood by those skilled in the art that the transfer sheet and the like of the present disclosure are not limited by the description of Example above, and the above Example and this description are merely for illustrating the principle of the present disclosure, and various modifications or improvements can be made without departing from the spirit and scope of the present disclosure, and all of these modifications or improvements are included in the scope of the present disclosure as claimed. Furthermore, the scope claimed by the present disclosure includes not only the scope of the claims but also equivalents thereof.

### Reference Signs List

1 transfer sheet
2 weather-resistant article
10 releasable substrate
20 transfer layer
22 surface protective layer
24 primer layer
26 adhesive layer
30 transfer receptor (e.g., exterior material)

## Claims

1. A transfer sheet comprising a releasable substrate and a transfer layer,
wherein the transfer layer includes a surface protective layer and a primer layer,
the surface protective layer is located between the releasable substrate and the primer layer, and
the surface protective layer contains a cured resin, a first UV absorber having an absorption peak at a first wavelength, a second UV absorber having an absorption peak at a second wavelength longer than the first wavelength, and a third UV absorber having an absorption peak at a third wavelength longer than the second wavelength.

2. The transfer sheet according to claim 1,
wherein a difference between the second wavelength and the first wavelength is 10 nm or more, and
a difference between the third wavelength and the second wavelength is 10 nm or more.

3. The transfer sheet according to claim 1 or 2, wherein the second wavelength is in a range of 310 nm or more to 330 nm or less.

4. The transfer sheet according to any one of claims 1 to 3, wherein the first wavelength is in a range of 270 nm or more to 300 nm or less.

5. The transfer sheet according to any one of claims 1 to 4, wherein the third wavelength is in a range of 340 nm or more to 370 nm or less.

6. The transfer sheet according to any one of claims 1 to 5, wherein in the surface protective layer, an amount of the second UV absorber is larger than that of the first UV absorber and larger than that of the third UV absorber.

7. The transfer sheet according to any one of claims 1 to 6, wherein the first UV absorber, the second UV absorber, and the third UV absorber are each independently a triazine UV absorber.

8. The transfer sheet according to any one of claims 1 to 7, wherein the surface protective layer contains a total of 0.5 parts by mass or more and 10 parts by mass or less of the first UV absorber, the second UV absorber, and the third UV absorber relative to 100 parts by mass of the cured resin contained in the surface protective layer.

9. The transfer sheet according to any one of claims 1 to 8, wherein the surface protective layer contains, relative to 100 parts by mass of the cured resin contained in the surface protective layer, 0.1 parts by mass or more and 3 parts by mass or less of the first UV absorber, 0.1 parts by mass or more and 8 parts by mass or less of the second UV absorber, and 0.1 parts by mass or more and 3 parts by mass or less of the third UV absorber.

10. The transfer sheet according to any one of claims 1 to 9, wherein the primer layer contains a UV absorber.

11. The transfer sheet according to any one of claims 1 to 10, wherein the transfer layer further includes a design layer.

12. The transfer sheet according to any one of claims 1 to 11, wherein the transfer layer further includes an adhesive layer as a surface layer on a side opposite from the releasable substrate.

13. The transfer sheet according to any one of claims 1 to 12, wherein the transfer sheet is for transferring the transfer layer onto at least part of a surface of an exterior material.

14. A weather-resistant article comprising:
a transfer receptor; and
a surface protective film disposed on at least part of a surface of the transfer receptor,
wherein the surface protective film is the transfer layer in the transfer sheet according to any one of claims 1 to 13, and the surface protective layer in the transfer layer constitutes at least part of a surface layer of the weather-resistant article.

15. The weather-resistant article according to claim 14,
wherein the transfer layer includes an adhesive layer, or
an adhesive layer is disposed between the transfer layer and the transfer receptor.
